# EUROPÄISCHE PATENTSCHRIFT

(11) **EP 2 350 343 B1**
(45) Veröffentlichungstag und Bekanntmachung des Hinweises auf die Patenterteilung: **31.10.2012**
(21) Anmeldenummer: 09759890.8
(22) Anmeldetag: 19.11.2009
(51) Int. Cl.: C23C 24/04, B05B 7/14, B65G 53/40

(54) **VORRICHTUNG ZUM ERZEUGEN UND FÖRDERN EINES GAS-PULVERGEMISCHES**
DEVICE FOR CREATING AND CONVEYING A GAS-POWDER MIXTURE
DISPOSITIF POUR LA PRODUCTION ET LE REFOULEMENT D'UN MÉLANGE GAZ-POUDRE

(30) Priorität: 27.11.2008 DE 102008059334
(43) Veröffentlichungstag der Anmeldung: 03.08.2011
(73) Patentinhaber: CGT Cold Gas Technology GmbH, 84539 Ampfing (DE)
(72) Erfinder: KOKOTT, Walter, 83022 Rosenheim (DE); HÖLL, Helmut, Paul, 84478 Waldkraiburg (DE); RICHTER, Peter, jun., 84431 Heldenstein (DE); RICHTER, Peter, sen., 84431 Heldenstein (DE)
(74) Vertreter: Bauer, Friedrich
(86) Internationale Anmeldenummer: PCT/EP2009/008252
(87) Internationale Veröffentlichungsnummer: WO 2010/060567

(56) Entgegenhaltungen:
- DE-A1-102004 021 850
- US-A1- 2007 160 769
- US-A1- 2007 193 646

## Beschreibung

Die Erfindung betrifft eine Vorrichtung zum Erzeugen und Fördern eines Gas-Pulvergemisches, insbesondere für Beschichtungsverfahren wie Kaltgasspritzen, unter erhöhtem Druck, gemäß dem Oberbegriff des Anspruchs 1.

Kaltgasspritzen ist bekanntermaßen eine Spritztechnik für Metalle und Kunststoffe, bei der ein pulverförmiger Spritzwerkstoff aus Metall, Metalllegierungen oder Kunststoff mit hoher Geschwindigkeit, insbesondere Überschallgeschwindigkeit, auf ein Substrat aufgespritzt wird, so dass sich das Pulver aufgrund seiner hohen kinetischen Energie mit dem Werkstoff des Substrats verbindet. Das Gas, vorzugsweise Stickstoff, wird durch hohen Druck und mittels einer Lavall-Düse (Venturi-Düse) auf Überschallgeschwindigkeit beschleunigt.

Ein Aufheizen des Gasstrahls erhöht die Strömungsgeschwindigkeit des Gases und somit auch die Partikelgeschwindigkeit. Die damit ebenfalls verbundende Erwärmung der Partikel begünstigt deren Verformung beim Aufprall. Die Gastemperatur liegt beim Kaltgasspritzen jedoch deutlich unterhalb der Schmelztemperatur des Spritzwerkstoffs, so dass ein Schmelzen der Partikel im Gasstrahl nicht stattfindet.

Eine Vorrichtung dieser Art ist beispielsweise aus der EP 0 484 533 A1 bekannt. Dort wird ein Pulverbehälter verwendet, bei dem mittels einer bodenseitig angeordneten Dosiertrommel Pulver dosiert in eine nachgelagerte Mischkammer abgegeben wird, in welche das Gas mit hohem Druck eingeleitet wird. Anschließend wird das Gemisch in einer Überschalldüse auf die gewünschte Überschallgeschwindigkeit beschleunigt. Pulverbehälter, Dosiertrommel und Mischkammer befinden sich in einem einzigen Gehäuse. Weiterhin ist dort der Pulveraufnahmeraum über eine Gasdruckausgleichsleitung mit der Gaszuführleitung verbunden, um so den Druck im Pulveraufnahmeraum und in der Mischkammer gleichmäßig zu verteilen und die Wirkung eines Drucks auf die Dosierung des Pulvers zu beseitigen. Diese bekannte Vorrichtung ist jedoch relativ kompliziert aufgebaut, teuer in der Herstellung und weist relativ große Abmessungen auf.

Der Erfindung liegt die Aufgabe zugrunde, eine Vorrichtung der eingangs genannten Art zu schaffen, die einen möglichst einfachen Aufbau aufweist sowie kostengünstig und mit relativ kleinen Abmessungen herzustellen ist.

Diese Aufgabe wird erfindungsgemäß durch eine Vorrichtung mit den Merkmalen des Anspruchs 1 gelöst. Vorteilhafte Ausführungsformen der Erfindung sind in den weiteren Ansprüchen beschrieben.

Bei der erfindungsgemäßen Vorrichtung weist der Pulverbehälter eine in den oberen Bereich des Pulveraufnahmeraums einmündende und mit einer Unterdruckerzeugungseinrichtung verbundene Unterdruckleitung auf, über welche innerhalb des Pulveraufnahmeraums ein im Vergleich zur Mischkammer reduzierter Druck und damit innerhalb des Pulverzuführkanals ein entgegen der Pulverströmungsrichtung gerichteter Gasstrom erzeugbar ist.

Aufgrund des im Pulveraufnahmeraum erzeugten relativen Unterdrucks wird im Pulveraufnahmeraum ein Gasstrom erzeugt, der von der Mischkammer durch den Pulverzuführkanal und durch das im Pulverbehälter bevorratete Pulver hindurch strömt und entgegen der Pulverzuführrichtung gerichtet ist. Es hat sich gezeigt, dass hierdurch auf spezielle Dosiereinrichtungen wie Dosiertrommeln, Förderräder, etc. zwischen Mischkammer und Pulveraufnahmeraum verzichtet und die Dosierung des Pulvers allein durch den entsprechend dimensionierten Pulverzuführkanal (oder durch mehrere entsprechende Pulverzuführkanäle) erfolgen kann. Die rückwärts gerichtete Gasströmung bewirkt, dass Strömungsblockaden und insbesondere eine Brückenbildung des Pulvers in oder unmittelbar vor dem Pulverzuführkanal vermieden werden, so dass auch bei einem geringen Durchmesser des Pulverzuführkanals eine kontinuierliche, gleichmäßige Pulverströmung erreicht werden kann. Es ist auch möglich, dass der gesamte Pulverstock im Pulverbehälter aufgrund der rückwärts gerichteten Gasströmung aufgelockert wird.

Da es erfindungsgemäß nicht mehr notwendig ist, zwischen Pulveraufnahmeraum und Mischkammer Dosiereinrichtungen in der Form von Dosiertrommeln, Förderrädern, etc. vorzusehen, kann die Vorrichtung einen einfachen Aufbau und kleine Abmessungen haben. Sie ist daher insbesondere auch für den portablen Einsatz geeignet. Die Komplexität der Vorrichtung wird reduziert. Weiterhin ist die Vorrichtung auch relativ einfach in kostengünstiger Weise herstellbar. Es hat sich auch gezeigt, dass damit eine sehr zuverlässige Pulverförderung möglich ist.

Gemäß einer vorteilhaften Ausführungsform ist die Unterdruckleitung mit der Gaszuführleitung gekoppelt, derart, dass der Unterdruck durch die Gasströmung in der Gaszuführleitung erzeugt wird. Bei dieser Ausführungsform wird somit ein "Saugstrahlpumpeneffekt" des der Mischkammer zugeführten Gases ausgenutzt.

Alternativ hierzu ist es auch möglich, dass die Unterdruckleitung mit einer von der Gaszuführleitung getrennten Unterdruckerzeugungseinrichtung verbunden ist.

Die Erfindung wird nachfolgend anhand der Zeichnung beispielhaft näher erläutert. Die einzige Figur zeigt einen Längsschnitt durch eine erfindungsgemäße Vorrichtung.

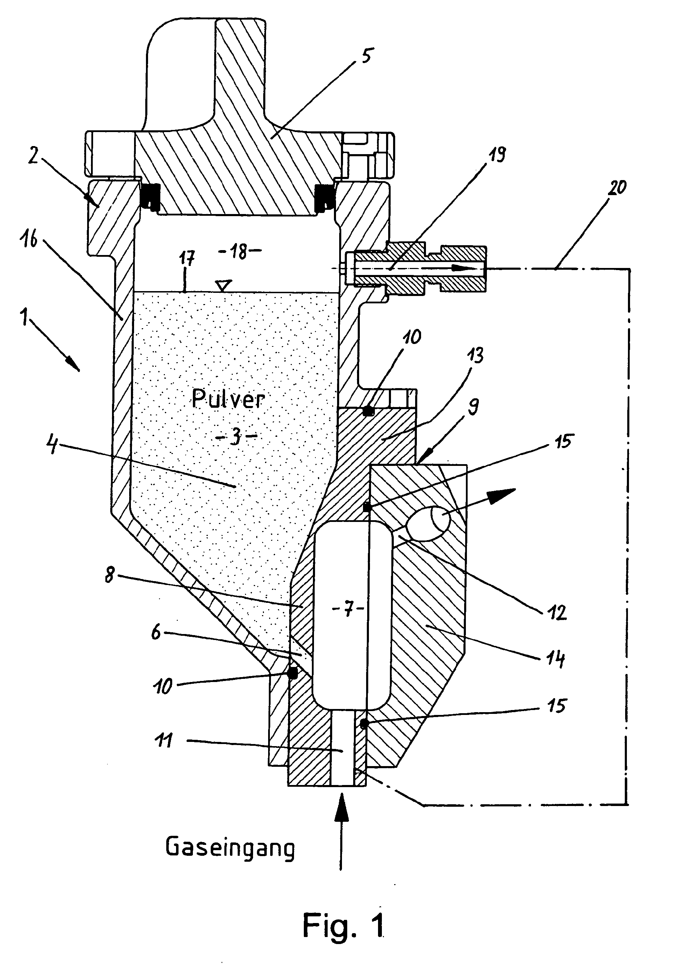

Die in Figur 1 gezeigte Vorrichtung umfasst ein Gehäuse 1 mit einem Pulverbehälter 2. Der Pulverbehälter 2 weist ein stabiles Pulverbehältergehäuse 16 auf, in dem sich ein Pulveraufnahmeraum 3 zur Aufnahme von Pulver 4 befindet. Das Pulver 4 kann beispielsweise aus Metall, Metalllegierungen, Kunststoffen oder anderen pulverförmigen Materialien sowie aus beliebigen Gemischen bestehen.

Der Pulverbehälter 1 ist an seiner Oberseite mittels eines Deckels 5 druckdicht verschließbar. Bei abgenommenem Deckel 5 ist der Pulverbehälter 2 von oben her mit dem Pulver 4 befüllbar. Die Befestigung des Deckels 5 erfolgt zweckmäßigerweise über eine Flanschverbindung mittels nicht dargestellter Schrauben.

Der Pulveraufnahmeraum 3 läuft in seinem unteren Bereich trichterförmig zusammen und ist an seinem unteren Ende über einen Pulverzuführkanal 6 und mit einer Mischkammer 7 verbunden. Die Mischkammer 7 befindet sich ebenfalls im Gehäuse 1 benachbart zum unteren Bereich des Pulveraufnahmeraums 3, von dem sie durch eine Wand 8 getrennt ist. Diese Wand 8 kann, wie dargestellt, Teil eines eigenen Mischkammergehäuses 9 sein, das sich über eine Aussparung des Pulverbehältergehäuses 16 erstreckt und dieses mittels Dichtungen 10 druckdicht verschließt. Dadurch kann die Herstellung des Pulverbehälters 2 und der Mischkammer 7 vereinfacht werden. Weiterhin ist es möglich, das Mischkammergehäuse 9 und damit auch den in der Wand 8 angeordneten Pulverzuführkanal 6 auf einfache Weise gegen ein anderes Mischkammergehäuse 9 auszutauschen, falls die Pulverart gewechselt und ein anderer Druchmesser des Pulverzuführkanals 6 erforderlich wird, um die gewünschte Pulverdosierung zu erreichen.

Der Mischkammer 7 wird über eine Gaszuführleitung 11 unter Druck stehendes Gas, beispielsweise Stickstoff, zugeführt. Das über den Pulverzuführkanal 6 zugeführte Pulver vermischt sich innerhalb der Mischkammer 7 mit dem einströmenden Gas und wird dort intensiv verwirbelt.

Das in der Mischkammer 7 gebildete Gas-Pulvergemisch wird über eine Gemischabführleitung 12 aus der Mischkammer 7 abgeführt und über eine nicht dargestellte weitere Leitung an die gewünschte Einsatzstelle transportiert. Wird die dargestellte Vorrichtung beispielsweise für ein Kaltspritz-Beschichtungsverfahren eingesetzt, kann das aus der Mischkammer 7 austretende Gas-Pulvergemisch insbesondere einer Überschalldüse (Lavall- oder Venturi-Düse) zur Beschleunigung des Gemischstroms und einer Heizeinrichtung zur Erwärmung des Gemisches zugeführt werden, bevor das Gemisch über eine Pistole mit hoher kinetischer Energie auf ein Substrat aufgespritzt wird.

Im dargestellten Ausführungsbeispiel ist das Mischkammergehäuse 9 zweiteilig ausgeführt und weist ein Mischkammerbasisteil 13 und ein Deckelteil 14 auf. Das Deckelteil 14 ist über Dichtungen 15 druckdicht mit dem Mischkammerbasisteil 13 verbunden, während das Mischkammerbasisteil 13 am Pulverbehältergehäuse 16 befestigt ist. Die Gemischabführleitung 12 befindet sich im Deckelteil 14 auf der entgegengesetzten Seite wie der Pulverzuführkanal 6. Die Gaszuführleitung 11 befindet sich im Mischkammerbasisteil 13. Alternativ kann sich die Gemischabführleitung 12 an jeder beliebigen Stelle rund um die Mischkammer 7 befinden.

Das Pulver 4 wird innerhalb des Pulverbehälters 2 zweckmäßigerweise bis zu einer bestimmten Maximalhöhe 17 eingefüllt. Diese Maximalhöhe 17 liegt ein bestimmtes Maß unterhalb des Deckels 5, so dass dazwischen ein Leerraum 18 vorhanden ist. In diesen Leerraum 18 mündet eine Unterdruckleitung 19, die zu einer Unterdruckerzeugungseinrichtung geführt ist. Über die Unterdruckerzeugungseinrichtung und die Unterdruckleitung 19 kann somit im Pulveraufnahmeraum 3 ein Unterdruck erzeugt werden. Unter Unterdruck wird hierbei ein relativer Unterdruck im Vergleich zu demjenigen Druck verstanden, der in der Mischkammer 7 herrscht. Beträgt der Druck in der Mischkammer 7 beispielsweise 20 Bar, so wird als Unterdruck jeder Druck verstanden, der geringer als 20 Bar ist, auch wenn er noch bedeutend höher als der Umgebungsdruck ist. Aufgrund des im Pulveraufnahmeraums 3 herrschenden relativen Unterdrucks strömt Gas von der Mischkammer 7 durch den Pulverzuführkanal 6 hindurch und von dort durch das Pulver 4 hindurch nach oben, wodurch das Pulver 4 insbesondere in dem Pulverzuführkanal 6 aufgelockert und ein Stocken des Pulverflusses verhindert wird. Hierdurch wird ein gleichförmiger, kontinuierlicher Pulverstrom durch den Pulverzuführkanal 6 vom Pulveraufnahmeraum 3 in die Mischkammer 7 selbst bei sehr kleinen Kanaldurchmessern sichergestellt.

Die Unterdruckerzeugungseinrichtung kann auf einfache Weise durch die Unterdruckleitung 19 selbst realisiert werden, indem diese, wie schematisch durch eine strichpunktierte Linie 20 dargestellt ist, zur Gaszuführleitung 11 zurückgeführt ist und derart in die Gaszuführleitung 11 einmündet, dass die Gasströmung nach Art einer Wasserstrahlpumpe einen relativen Unterdruck in der Unterdruckleitung 19 erzeugt.

Es ist ohne Weiteres möglich, am Ausgang der Mischkammer 7, d.h. unmittelbar vor der Gemischabführleitung 12 oder innerhalb der Gemischabführleitung 12, eine Dosiereinrichtung in der Form einer Dosierscheibe, Dosierschnecke, eines Förderrads etc. vorzusehen, um die Menge des abströmenden Gas-Pulvergemisches zu regulieren. Eine derartige Dosiereinrichtung wird dann zweckmäßigerweise am Deckelteil 14 des Mischkammergehäuses 9 angebracht. Die Zweiteilung des Mischkammergehäuses 9 in ein Mischkammerbasisteil 13 und das Deckelteil 14 ermöglicht dies durch einfaches Austauschen des Deckelteils 14.

Die beschriebene Vorrichtung kann nicht nur für Beschichtungsverfahren wie Kaltgasspritzen verwendet werden, sondern ist bei vielen Verfahren einsetzbar, bei denen einem Gasstrom ein Pulver zugemischt wird. Beispielsweise kann die Vorrichtung auch bei thermischen Spritzverfahren (z.B. Gasflammenbesprühungsverfahren, Plasmabeschichtungsverfahren etc.) verwendet werden, bei denen die zugeführten Pulverpartikel im Gasstrom geschmolzen werden. Ferner ist die erfindungsgemäße Vorrichtung auch zum Befördern beliebiger anderer pulverförmiger Stoffe mittels eines Gasstroms anwendbar, beispielsweise in der Lebensmittelindustrie. Es ist weiterhin auch ohne Weiteres möglich, nicht nur einen, sondern mehrere Pulverbehälter 2 vorzusehen, welche über jeweils eigene Pulverzuführkanäle mit der Mischkammer 7 verbunden sind.

## Patentansprüche

1. Vorrichtung zum Erzeugen und Fördern eines Gas-Pulvergemisches, insbesondere für Beschichtungsverfahren wie Kaltgasspritzen, unter erhöhtem Druck, mit:
- einem Pulverbehälter (2), der einen Pulveraufnahmeraum (3) zum Aufnehmen eines Pulvers (4) umfasst,
- einer Mischkammer (7) zum Mischen von Gas und Pulver (4),
- einer Gaszuführeinrichtung mit einer Gaszuführleitung (11) zum Zuführen von unter erhöhtem Druck stehendem Gas in die Mischkammer (7),
- mindestens einem Pulverzuführkanal (6), der zwischen dem Pulveraufnahmeraum (3) und der Mischkammer (7) angeordnet ist, um Pulver (4) vom Pulveraufnahmeraum (3) in die Mischkammer (7) zu leiten,
- eine Gemischabführleitung (12) zum Abführen des Gas-Pulvergemisches aus der Mischkammer (7),
**dadurch gekennzeichnet, dass** der Pulverbehälter (2) eine in den Bereich des Pulveraufnahmeraums (3) einmündende und mit einer Unterdruckerzeugungseinrichtung verbundene Unterdruckleitung (19) aufweist, über welche innerhalb des Pulveraufnahmeraums (3) ein im Vergleich zur Mischkammer (7) reduzierter Druck und damit innerhalb des Pulverzuführkanals (6) ein entgegen der Pulverströmungsrichtung gerichteter Gasstrom erzeugt wird.

2. Vorrichtung nach Anspruch 1, **dadurch gekennzeichnet, dass** die Unterdruckleitung (19) mit der Gaszuführleitung (11) gekoppelt ist, derart, dass der Unterdruck durch die Gasströmung in der Gaszuführleitung (11) erzeugt wird.

3. Vorrichtung nach Anspruch 1, **dadurch gekennzeichnet, dass** die Unterdruckleitung (19) mit einer von der Gaszuführleitung (11) getrennten Unterdruckerzeugungseinrichtung verbunden ist.

4. Vorrichtung nach einem der vorhergehenden Ansprüche, **dadurch gekennzeichnet, dass** sich der Pulveraufnahmeraum (3) und die Mischkammer (7) in einem mehrteiligen Gehäuse (1) befinden, das ein Pulverbehältergehäuse (16) und ein Mischkammergehäuse (9) umfasst.

5. Vorrichtung nach Anspruch 4, **dadurch gekennzeichnet, dass** das Mischkammergehäuse (9) mehrteilig ausgebildet ist und ein Mischkammerbasisteil (13) und ein Mischkammerdeckelteil (14) umfasst.

6. Vorrichtung nach einem der vorhergehenden Ansprüche, **dadurch gekennzeichnet, dass** unmittelbar vor oder in der Gemischabführleitung (12) eine Dosiereinrichtung zur dosierten Abgabe des Gas-Pulvergemisches aus der Mischkammer (7) angeordnet ist.

7. Vorrichtung nach Anspruch 6, **dadurch gekennzeichnet, dass** die Dosiereinrichtung im Mischkammerdeckelteil (14) angeordnet ist.

## Claims

1. Device for producing and conveying a gas-powder mixture, in particular for coating processes such as cold-gas spraying, at an increased pressure, comprising:
- a powder container (2) which comprises a powder holding chamber (3) for holding a powder (4)
- a mixing chamber (7) for mixing gas and powder (4),
- a gas supply means comprising a gas supply line (11) for supplying gas which is at an increased pressure into the mixing chamber (7),
- at least one powder supply duct (6), which is arranged between the powder holding chamber (3) and the mixing chamber (7), for carrying powder (4) from the powder holding chamber (3) into the mixing chamber (7),
- a mixture outlet line (12) for removing the gas-powder mixture from the mixing chamber (7), **characterised in that** the powder container (2) comprises a vacuum line (19), which opens into the region of the powder holding chamber (3) and is connected to a vacuum generating means, and via which a reduced pressure is generated within the powder holding chamber (3) by comparison with the mixing chamber (7) and a gas flow directed counter to the powder flow direction can thus be generated within the powder supply duct (6).

2. Device according to claim 1, **characterised in that** the vacuum line (19) is coupled to the gas supply line (11) in such a way that the vacuum is generated by the gas flow in the gas supply line (11).

3. Device according to claim 1, **characterised in that** the vacuum line (19) is connected to a vacuum generating means which is separated from the gas supply line (11).

4. Device according to any one of the preceding claims, **characterised in that** the powder holding chamber (3) and the mixing chamber (7) are located in a multi-part housing (1) which comprises a powder container housing (16) and a mixing chamber housing (9).

5. Device according to claim 4, **characterised in that** the mixing chamber housing (9) is formed in a plurality of parts and comprises a mixing chamber base part (13) and a mixing chamber cover part (14).

6. Device according to any one of the preceding claims, **characterised in that** a metering means for the metered release of the gas-powder mixture from the mixing chamber (7) is arranged immediately before or within the mixture outlet line (12).

7. Device according to claim 6, **characterised in that** the metering device is arranged in the mixing chamber cover part (14).

## Revendications

1. Dispositif pour la production et le convoyage d'un mélange gaz-poudre, en particulier pour un procédé de revêtement comme la pulvérisation gazeuse à froid sous pression élevée, comprenant :
- un récipient de poudre (2) qui comprend une chambre de réception de poudre (3) pour recevoir une poudre (4),
- une chambre de mélange (7) pour mélanger le gaz et la poudre (4),
- un système d'amenée de gaz avec un conduit d'amenée de gaz (11) pour amener dans la chambre de mélange (7) un gaz sous pression élevée,
- au moins un canal d'amenée de poudre (6), qui est agencé entre la chambre de réception de poudre (3) et la chambre de mélange (7) afin d'amener la poudre (4) depuis la chambre de réception de poudre (3) jusque dans la chambre de mélange (7),
- un conduit d'évacuation de mélange (12) pour évacuer le mélange gaz-poudre hors de la chambre de mélange (7),
**caractérisé en ce que** le récipient de poudre (2) comprend un conduit sous dépression (19) qui débouche dans la région de la chambre de réception de poudre (3) et qui est relié à un système de production de dépression, conduit via lequel une pression réduite par comparaison à la chambre de mélange (7) est engendrée à l'intérieur de la chambre de réception de poudre (3), et ainsi un courant gazeux dirigé en sens inverse à la direction d'écoulement de la poudre est engendré à l'intérieur du canal d'amenée de poudre (6).

2. Dispositif selon la revendication 1, **caractérisé en ce que** le conduit sous dépression (19) est couplé au conduit d'amenée de gaz (11) de telle façon que la dépression est engendrée par l'écoulement de gaz dans le conduit d'amenée de gaz.

3. Dispositif selon la revendication 1, **caractérisé en ce que** le conduit sous dépression (19) est relié à un système de production de dépression séparé du conduit d'amenée de gaz (11).

4. Dispositif selon l'une des revendications précédentes, **caractérisé en ce que** la chambre de réception de poudre (3) et la chambre de mélange (7) se trouvent dans un boîtier en plusieurs pièces (1) qui inclut un boîtier de récipient de poudre (16) et un boîtier de chambre de mélange (9).

5. Dispositif selon la revendication 4, **caractérisé en ce que** le boîtier de chambre de mélange (9) est réalisé en plusieurs pièces, et comprend une partie de base de chambre de mélange (13) et une partie de couvercle de chambre de mélange (14).

6. Dispositif selon l'une des revendications précédentes, **caractérisé en ce qu'**un dispositif de dosage, destiné à la sortie dosée du mélange gaz-poudre hors de la chambre de mélange (7), est agencé directement devant ou dans le conduit d'évacuation de mélange (12).

7. Dispositif selon la revendication 6, **caractérisé en ce que** le dispositif de dosage est agencé dans la partie de couvercle de chambre de mélange (14).
